# FASCICULE DE BREVET EUROPEEN

(11) **EP 2 688 184 B1**
(45) Date de publication et mention de la délivrance du brevet: **30.08.2017**
(21) Numéro de dépôt: 13003525.6
(22) Date de dépôt: 12.07.2013
(51) Int. Cl.: H02K 7/00, H02K 7/108, H02K 16/00, H02K 16/02, B64C 27/12

(54) **Machine électrique réversible pour aéronef**
Reversible elektrische Maschine für Luftfahrzeug
Reversible electric machine for aircraft

(30) Priorité: 19.07.2012 FR 1202056
(43) Date de publication de la demande: 22.01.2014
(73) Titulaire: Airbus Helicopters, 13725 Marignane Cedex (FR)
(72) Inventeur: Mariotto, Damien, 13410 Lambesc (FR)
(74) Mandataire: GPI & Associés

(56) Documents cités:
- EP-A1- 2 206 619
- EP-A1- 2 413 483
- WO-A1-2009/028464
- DE-U1-202008 002 249
- US-A1- 2008 106 163

## Description

La présente invention est du domaine des machines électriques. Elle concerne une machine électrique réversible, c'est-à-dire une machine électrique pouvant être motrice ou bien génératrice. Elle concerne plus particulièrement une machine électrique réversible destinée à un aéronef à voilure tournante ainsi qu'une installation motrice d'un tel aéronef.

Une machine électrique est dite réversible quand elle permet d'une part la transformation d'énergie électrique en énergie mécanique et d'autre part la transformation d'énergie mécanique en énergie électrique.

Une machine électrique transformant de l'énergie électrique en énergie mécanique est appelée un moteur. Une machine électrique transformant de l'énergie mécanique en énergie électrique est appelée un générateur ou une génératrice. On peut distinguer, parmi les générateurs, les alternateurs fournissant un courant électrique alternatif et les dynamos fournissant un courant électrique continu.

Toute machine électrique peut être réversible, c'est-à-dire qu'elle peut être à la fois un moteur et un générateur, la distinction entre les fonctions moteur et générateur ne se faisant que par rapport à la destination et l'utilisation de cette machine électrique. On parle également de moteur-générateur si les deux fonctions sont disponibles sur la machine électrique.

Les moteurs couramment utilisés peuvent être rotatifs, c'est-à-dire produisant un déplacement angulaire et/ou un couple, ou bien linéaires, c'est-à-dire produisant un déplacement linéaire et/ou une force.

Par contre, les génératrices sont essentiellement rotatives.

Une machine électrique tournante est un dispositif électromécanique comportant au moins un stator, qui est fixe et au moins un rotor tournant par rapport à ce stator. La rotation de ce rotor est générée par l'interaction entre deux champs magnétiques attachés respectivement à ce stator et à ce rotor, créant un couple magnétique au rotor. On parle alors d'un « champ magnétique statorique » et d'un « champ magnétique rotorique ».

La suite de cette description se limitant aux machines électriques tournantes, on utilisera plus simplement les termes « machine électrique » pour désigner une machine électrique tournante. De même, les termes « moteur électrique » désigneront un moteur électrique rotatif et le terme « génératrice » désignera une génératrice électrique rotative.

Les différentes technologies de machines électriques se distinguent essentiellement par la manière de générer ces champs magnétiques statorique et rotorique.

Par exemple, dans un moteur électrique à courant continu, le stator comporte des éléments magnétiques, qui peuvent être des aimants permanents ou bien des aimants non permanents, appelés plus communément électro-aimants et constitués généralement par des enroulements de conducteurs électriques, tels qu'un ou plusieurs bobinages, alimentés en courant électrique continu. Dans les deux cas, un champ magnétique statorique fixe est ainsi créé. Par contre, le rotor comporte des aimants non permanents constitués par un ensemble de bobinages créant un champ magnétique rotorique lorsqu'ils sont traversés par un courant électrique continu. Lors de la rotation de ce rotor, un collecteur rotatif permet d'inverser, au moins une fois par tour, le sens de ce courant continu traversant les bobinages du rotor, modifiant ainsi le sens du champ magnétique rotorique.

Ainsi, un décalage entre les champs magnétiques statorique et rotorique provoque un couple magnétique au rotor, un pôle nord du stator repoussant par exemple un pôle nord du rotor et attirant un pôle sud du rotor. Par suite, une rotation du rotor par rapport au stator est générée.

Un inconvénient principal d'une telle machine électrique à courant continu réside dans les contacts électriques nécessaires entre les bobinages du rotor et le collecteur rotatif. Ces contacts, obtenus par exemple par des balais, peuvent créer des arcs électriques générant notamment de l'usure et des parasites qui nécessitent par la suite des fréquences de maintenance plus élevées de la machine électrique. De plus, ce type de moteurs électriques n'est pas adapté aux hautes vitesses de rotation et consomme de l'énergie par frottement dégradant son rendement. Enfin, il peut être complexe à réaliser.

Cet inconvénient a été éliminé grâce à la technologie des moteurs sans balai, également dénommé « moteur brushless ».

Le rotor d'un tel moteur comporte un ou plusieurs aimants permanents alors que le stator comporte plusieurs bobinages constituant des aimants non permanents. Un tel moteur peut également disposer d'un moyen de connaître la position du rotor, via l'utilisation d'un capteur par exemple, ainsi que d'un système électronique de commande assurant la commutation du courant électrique. Un courant alternatif circule alors dans les différents bobinages du stator. Ainsi, ce système électronique de commande permet d'assurer l'orientation et le sens du champ magnétique statorique par rapport au champ magnétique rotorique, et par suite la rotation du rotor par rapport au stator, le champ tournant statorique accrochant le champ rotorique.

De plus, un ou plusieurs bobinages du stator peuvent être regroupés afin de former différentes phases du stator, chaque phase ayant un même décalage par rapport aux autres phases. Chaque phase génère ainsi un champ magnétique statorique, chaque champ magnétique statorique étant également décalé par rapport aux autres champs magnétiques statoriques.

Parmi les machines électriques à courant alternatif, on peut distinguer les machines électriques synchrones et asynchrones.

Les machines électriques synchrones, dont fait partie le moteur sans balai, dispose d'un rotor comportant un ou plusieurs aimants permanents et un stator comportant un ou plusieurs bobinages pouvant former ainsi une ou plusieurs phases. De fait, lorsqu'ils sont traversés par un ou plusieurs courants électriques alternatifs, les bobinages du stator créent un ou plusieurs champs magnétiques statoriques tournant qui accroche le champ magnétique rotorique à la fréquence de synchronisme de la machine, et par suite entraîne la rotation du rotor.

Inversement, une rotation du rotor, générée par une puissance mécanique externe, crée un champ magnétique rotorique tournant, qui provoquera la création d'un ou plusieurs champs magnétiques statoriques tournant et par suite l'apparition et la circulation d'un ou plusieurs courants alternatifs dans les bobinages du stator.

Les aimants permanents du rotor peuvent être remplacés par des bobinages alimentés en courant continu, constituant des aimants non permanents, et créant ainsi un champ magnétique rotorique équivalent. Le courant continu peut être délivré par un générateur de courant électrique tel qu'une batterie ou un condensateur.

La fréquence de rotation du rotor d'un moteur électrique synchrone est proportionnelle à la fréquence du courant alternatif appliqué au niveau du stator. De même, la fréquence du courant alternatif généré dans une génératrice électrique synchrone est proportionnelle à la fréquence de rotation du rotor. La machine synchrone est souvent utilisée comme génératrice, par exemple comme alternateur dans les centrales électriques.

Les machines électriques asynchrones disposent d'un rotor comportant un ou plusieurs bobinages en court-circuit et un stator comportant plusieurs bobinages, constituant des aimants non permanents. De fait, lorsque les bobinages de ce stator sont traversés par un courant électrique alternatif, ils créent un ou plusieurs champs magnétiques statoriques tournant qui entraînent l'apparition d'un courant électrique rotorique dans les bobinages du rotor, générant alors un couple magnétique sur ce rotor, et par suite la rotation de ce rotor par rapport au stator.

Inversement, une rotation du rotor, générée par une puissance mécanique externe, entrainera l'apparition et la circulation d'un courant électrique alternatif dans les bobinages du stator. Pour cela il faudra connecter la machine électrique à un réseau, comportant par exemple au moins un convertisseur et une batterie, afin de lui fournir l'énergie réactive nécessaire à son fonctionnement en mode génératrice.

Bien que la fréquence de rotation du champ magnétique statorique soit proportionnelle à la fréquence des courants alternatifs qui traversent les bobinages du stator, la fréquence de rotation du rotor d'un moteur électrique asynchrone n'est pas forcément proportionnelle à cette fréquence des courants alternatifs, une vitesse de glissement pouvant apparaître entre le rotor et le champ magnétique statorique. De même, la fréquence du courant électrique alternatif généré dans une génératrice électrique asynchrone n'est pas forcément proportionnelle à la fréquence de rotation du rotor.

La machine asynchrone a longtemps été utilisée uniquement en tant que moteur électrique, par exemple dans le transport pour la propulsion des navires et des trains ainsi que dans l'industrie pour des machines-outils. Grâce à l'utilisation de l'électronique de puissance, de telles machines électriques sont également utilisées aujourd'hui en tant que génératrices électriques, par exemple dans les éoliennes.

Quelque soit le type de machines électriques réversibles, les aimants permanents ou non permanents peuvent être orientés radialement ou bien axialement par rapport à l'axe de rotation de la machine électrique. Ces différentes orientations des aimants permettent d'orienter le flux magnétique circulant dans la machine électrique, qui est alors radial ou axial. Sur une même machine, il est également possible d'utiliser des aimants orientés radialement et d'autres aimants orientés axialement.

Les machines électriques comportant des aimants permanents sur le rotor sont les plus performantes grâce à leurs rendements élevés en mode moteur, permettant d'avoir une puissance massique importante, et au fort couple magnétique généré au rotor par ces aimants permanents. De plus, n'utilisant pas de balai, les frottements sont réduits, ce qui contribue à l'amélioration des performances de telles machines électriques, notamment une vitesse d'utilisation élevée, et à la diminution de la fréquence de maintenance.

Par contre, pour avoir un rendement maximal, la machine électrique étant réversible, la puissance mécanique fournit par le rotor en mode moteur doit être égale à la puissance susceptible d'être générée électriquement au stator en mode génératrice. En effet, si la totalité de la puissance en mode génératrice n'est pas utilisée, cela se traduit par des pertes importantes par effet Joule et par une dégradation du rendement ainsi que de la puissance massique de la machine, notamment due à l'ajout d'un système important de dissipation des calories générées par effet Joule.

De plus, un court-circuit sur un ou plusieurs bobinages du stator, et par conséquence sur une ou plusieurs phases du stator, peut générer un couple résistant élevé qui peut entrainer une chute rapide de la vitesse de rotation de la machine électrique réversible. Ce freinage de la rotation de la machine électrique peut entrainer des conséquences graves par exemple sur un organe de transmission lié mécaniquement à l'arbre de sortie de cette machine électrique. Enfin, un court-circuit sur un ou plusieurs bobinages du stator peut créer, lors de la rotation du rotor, des courants induits élevés dans chaque bobinage court-circuité qui peut causer un échauffement local de ce bobinage susceptible de provoquer un feu.

Ce type de machine électrique bien que réversible ne permet donc pas d'atteindre des niveaux de performances équivalents en fonctionnement moteur et génératrice si la demande est déséquilibré entre ces deux types de fonctionnement. En conséquence, un niveau de sécurité suffisant n'est pas atteint pour une intégration d'une telle machine électrique réversible à aimants permanents dans un aéronef à voilure tournante par exemple.

Les machines électriques avec des bobinages au niveau du rotor permettent de supprimer ces inconvénients, c'est à dire le couple résistant freinant le rotor et le risque de feu, dues à un court-circuit d'un ou plusieurs bobinages du stator. De fait, ces machines électriques ont des niveaux de performances équivalents en fonctionnement moteur et génératrice en permettant d'ajuster les courants appliqués aux bobinages du rotor en mode génératrice. Cependant, de telles machines électriques sont moins performantes en mode moteur que celles utilisant des aimants permanents. De fait, pour obtenir un niveau de performances équivalent à une machine électrique à aimants permanents, notamment au niveau du couple en mode moteur, ces machines électriques doivent être de dimensions plus importantes, c'est-à-dire d'un volume et d'une masse plus importants.

Par ailleurs, l'utilisation de telles machines électriques réversibles à bord de véhicules, et notamment d'aéronefs à voilure tournante, se développe afin de réaliser une installation motrice hybride utilisant deux types d'énergie, d'une part thermique et d'autre part électrique. Cependant, quelques contraintes de ces machines électriques en limitent l'application.

On distingue en particulier deux types d'hybridations appliqués aux aéronefs à voilure tournante. Tout d'abord, l'hybridation parallèle est la connexion d'un moteur électrique au rotor principal de l'aéronef, par l'intermédiaire d'une boite de transmission principale de puissance par exemple, afin d'apporter de l'énergie mécanique à ce rotor principal et de récupérer de l'énergie mécanique de ce rotor, notamment dans des phases de vol bien spécifiques. Ensuite la micro-hybridation est la connexion d'un moteur électrique à un turbomoteur par l'intermédiaire d'un compresseur de ce turbomoteur par exemple afin d'apporter de l'énergie mécanique à ce turbomoteur et de récupérer de l'énergie mécanique de ce turbomoteur dans des phases de fonctionnement spécifiques, autres que son démarrage.

Tout d'abord, pour un aéronef à voilure tournante, cette machine électrique réversible peut être liée mécaniquement à la boîte de transmission principale de puissance ou au compresseur d'un turbomoteur et le besoin en couple de la machine électrique en mode moteur est important. Par contre, ce besoin en couple est préjudiciable, comme évoqué précédemment, aux performances d'une telle machine électrique en mode génératrice car la demande de puissance électrique en mode génératrice est bien inférieure à la demande de puissance mécanique en mode moteur, ou bien nécessite des machines électriques lourdes et volumineuses, incluant notamment un système de refroidissement important. On peut également utiliser deux machines électriques, une première machine électrique remplissant la fonction moteur uniquement et une seconde machine électrique remplissant la fonction génératrice.

De plus, en cas de court-circuit sur au moins un bobinage d'une de ces machines électriques, des dommages importants peuvent être générés notamment à la boîte de transmission principale de puissance de l'aéronef et à l'environnement entourant cette machine électrique. Pour éviter ces dommages, une solution est l'utilisation d'une section fusible de diamètre réduit sur la liaison entre la machine électrique et la boîte de transmission principale de puissance par exemple. Mais le dimensionnement de cette section est tel que son couple de rupture doit être inférieur au couple résistant de la machine électrique généré dans le cas d'un court-circuit et supérieur au couple de la machine électrique en mode moteur. L'énergie nécessaire pour la rupture de cette section à casser est alors très importante. En conséquence, une telle section fusible est difficile à mettre en place, le couple résistant de la machine électrique et le couple de la machine électrique en mode moteur pouvant être équivalents. Il est cependant possible de surdimensionner la machine électrique afin d'avoir un couple résistant de la machine électrique, en cas de court-circuit sur au moins un bobinage supérieur au couple de la machine électrique en mode moteur. Par contre, une telle machine a alors des dimensions et une masse peu favorable à son utilisation à bord d'un aéronef à voilure tournante.

Une autre solution connue est l'utilisation d'une liaison débrayable telle qu'une roue libre entre la machine électrique et la boîte de transmission principale de puissance. Ce type de liaison évite d'endommager la boîte de transmission principale de puissance lors d'un tel court-circuit, mais ne permet plus d'utiliser la machine électrique de façon réversible, perdant ainsi la fonction génératrice.

On connaît également le document EP1324893 qui décrit une machine électrique comportant deux ensembles électriques munis chacun d'un rotor et d'un stator ainsi qu'une roue libre entre les deux rotors. De plus, un premier ensemble de cette machine électrique peut être relié, par l'intermédiaire du premier rotor, à l'arbre de transmission d'un moteur thermique d'un véhicule automobile alors que le second ensemble peut être relié, par l'intermédiaire du second rotor, à un embrayage qui est relié à la boîte de vitesses de ce véhicule. Ainsi la roue libre assure la solidarisation des deux rotors selon un sens de rotation et la désolidarisation selon l'autre sens de rotation.

De fait, le premier ensemble électrique est capable d'assurer le démarrage du moteur thermique. Lorsque le moteur thermique entraîne la boîte de vitesses, les deux ensembles électriques sont également entraînés par ce moteur thermique et par l'intermédiaire de la roue libre. Ils peuvent alors fonctionner en mode génératrice pour fournir une énergie électrique. En propulsion électrique, le moteur thermique est arrêté et le second ensemble électrique assure seul l'entraînement de la boîte de vitesses, la roue libre assurant que le premier ensemble électrique et le moteur thermique ne soient pas entraînés par le second ensemble électrique. Enfin, en descente par exemple, la roue libre assure une désolidarisation entre le premier et le second rotor, le moteur thermique pouvant alors être ralenti. Le premier ensemble électrique peut ainsi être utilisé en tant que génératrice, le second ensemble électrique pouvant être utilisé comme génératrice ou bien comme frein.

La présente invention a alors pour objet de proposer une machine électrique réversible permettant de supprimer les inconvénients mentionnées ci-dessus et capable d'une part d'entrainer en rotation un rotor principal d'un aéronef, par l'intermédiaire de sa boîte de transmission principale de puissance par exemple, et d'autre part de transformer une partie de l'énergie mécanique de ce rotor principal en énergie électrique.

La machine électrique réversible selon l'invention peut également permettre d'entrainer en rotation un compresseur d'un turbomoteur d'un aéronef et d'autre part de transformer une partie de l'énergie mécanique de ce compresseur en énergie électrique.

Selon l'invention, une machine électrique réversible comporte un premier dispositif électrique muni d'un premier rotor coopérant avec un premier stator, un second dispositif électrique muni d'un second rotor coopérant avec un second stator, un arbre de sortie et un premier moyen d'accouplement débrayable permettant de solidariser ou désolidariser en rotation les premier et second rotors de ces dispositifs électriques.

Cette machine électrique réversible peut être installée dans un aéronef à voilure tournante, l'arbre de sortie de cette machine électrique réversible pouvant être alors lié mécaniquement à la boîte de transmission principale de puissance de cet aéronef ou au compresseur d'un turbomoteur de cet aéronef.

Cette machine électrique réversible est remarquable en ce qu'elle comporte également un second moyen d'accouplement reliant mécaniquement le second rotor à l'arbre de sortie de cette machine électrique réversible. Ce second moyen d'accouplement est débrayable sous un premier effort prédéterminé.

Le premier dispositif électrique est un moteur et le second dispositif électrique est un moteur-générateur. En effet, le premier dispositif électrique fonctionne uniquement en mode moteur afin de transmettre une forte puissance mécanique à l'arbre de sortie alors que le second dispositif électrique peut fonctionner aussi bien en mode moteur afin de transmettre une puissance mécanique complémentaire à l'arbre de sortie qu'en mode génératrice, l'arbre de sortie transmettant alors une puissance mécanique au second dispositif électrique.

En effet, l'utilisation d'un premier moyen d'accouplement débrayable entre le premier et le second rotor permet d'avoir ce fonctionnement remarquable des deux dispositifs électriques.

Ainsi, lorsque le premier dispositif assure sa fonction moteur, ce premier moyen d'accouplement est embrayé afin que le premier rotor transmettre une forte puissance mécanique à l'arbre de sortie de la machine électrique réversible, éventuellement par l'intermédiaire du second rotor. De plus, le second rotor peut apporter un complément de puissance mécanique à l'arbre de sortie par l'intermédiaire du second moyen d'accouplement, ce second dispositif électrique étant également en mode moteur. Dans ce cas, la machine électrique réversible selon l'invention fournit par l'intermédiaire de l'arbre de sortie une puissance mécanique maximum.

Par contre, lorsque l'arbre de sortie reçoit une puissance mécanique, de la part d'une boîte de transmission principale de puissance d'un aéronef par exemple, cette puissance mécanique est alors transmise au second rotor par l'intermédiaire du second moyen d'accouplement. Le second dispositif électrique est alors en mode génératrice et transforme cette puissance mécanique en puissance électrique. Le premier moyen d'accouplement est alors débrayé afin de désolidariser le second dispositif électrique du premier dispositif électrique. Ainsi, aucun couple résistant n'est transmis par le premier dispositif électrique au second dispositif électrique. Le rendement de la transformation de cette puissance mécanique en puissance électrique est donc optimisé.

De plus, dans le cas de l'hybridation parallèle par exemple, la puissance de la machine électrique réversible en mode moteur est beaucoup plus importante qu'en mode génératrice. En effet, le besoin en puissance mécanique, dans le cas d'un aéronef à voilure tournante par exemple est important pour entrainer une boîte de transmission principale de puissance, et par suite, le rotor principal de cet aéronef. Par contre, en mode génératrice, le besoin de puissance électrique générée par la machine électrique réversible pour par exemple alimenter des équipements électrique d'un aéronef ou bien recharger des moyens de stockage d'énergie électrique, est plus faible.

De même, dans le cas de la micro-hybridation, la puissance de la machine électrique réversible en mode moteur est beaucoup plus importante qu'en mode génératrice. En effet, le besoin en puissance mécanique pour entrainer le turbomoteur est important. Par contre, en mode génératrice, le besoin de puissance électrique générée par la machine électrique réversible pour alimenter les équipements électrique d'un aéronef ou bien recharger des moyens de stockage d'énergie électrique, est plus faible.

Par exemple dans le cas de l'hybridation parallèle, la puissance de la machine électrique réversible en mode génératrice représente 10% de la puissance en mode moteur. Ainsi, le premier dispositif électrique fonctionnant uniquement en mode moteur peut être dimensionné pour fournir 90% de la puissance totale de la machine électrique réversible en mode moteur alors que le second dispositif électrique fonctionnant en mode génératrice et en mode moteur peut être dimensionné pour fournir 10% de cette puissance totale en mode moteur.

Par ailleurs, en cas d'apparition d'un couple résistant dans le premier dispositif électrique, par exemple suite à un court-circuit sur au moins un enroulement de fils conducteurs électriques, tel un bobinage, du premier stator de ce premier dispositif électrique, le premier moyen d'accouplement est débrayé. Ainsi, le premier rotor ne tourne plus par rapport au premier stator, et par suite, aucun courant induit ne circulant dans cet enroulement du premier stator, aucune augmentation brutale de la température au sein de ce premier dispositif électrique n'apparaît. De plus, ce freinage du premier rotor du premier dispositif électrique ne se transmet pas au second dispositif électrique, ni à l'arbre de sortie. Par suite, aucune dégradation n'est engendrée par ce freinage du premier dispositif électrique aux éléments liés à cet arbre de sortie, tels qu'une boîte de transmission principale de puissance d'un aéronef. De plus, la machine électrique réversible peut continuer de fonctionner, en mode moteur ou bien en mode génératrice par l'intermédiaire du second dispositif électrique.

De même, en cas de freinage du second dispositif électrique, par exemple suite à un court-circuit sur au moins un enroulement de fils conducteurs électriques, tel un bobinage, de ce second dispositif électrique, le second moyen d'accouplement doit être débrayé afin que ce freinage du second dispositif électrique ne se transmette pas à l'arbre de sortie. Ainsi aucune dégradation n'est engendrée par ce freinage du second dispositif électrique aux éléments liés à cet arbre de sortie.

De préférence, le débrayage du second moyen d'accouplement est réalisé de façon automatique, à partir d'un premier effort prédéterminé. En effet, ce second moyen d'accouplement transmet d'une part le couple fournit à l'arbre de sortie par le second dispositif électrique en mode moteur éventuellement associé au premier dispositif électrique en mode moteur, et d'autre part le couple fournit par l'arbre de sortie au second dispositif électrique en mode génératrice. Il est donc possible de déterminer le couple maximum à transmettre par ce second moyen d'accouplement.

Ainsi, le premier effort prédéterminé à partir duquel le second moyen d'accouplement doit être débrayé doit être supérieur au couple maximum qu'il doit transmettre et inférieur au couple de freinage du second dispositif électrique.

Le second moyen d'accouplement peut comporter un élément fusible liant en rotation un alésage solidaire du second rotor dans lequel l'arbre de sortie est positionné et cet arbre de sortie. Cet élément fusible est défini pour rompre sous le premier effort prédéterminé afin de désolidariser l'alésage et l'arbre de sortie, et par suite le second rotor de l'arbre de sortie.

De fait, ce second moyen d'accouplement est simple à concevoir, à mettre en place et à remplacer après rupture. En conséquence, ce second moyen d'accouplement est une solution peu coûteuse et fiable. Par exemple, cet élément fusible est une goupille ou une clavette.

Chaque stator de la machine électrique réversible selon l'invention comporte un ou plusieurs enroulements de fils conducteurs, tels des bobinages, représentant une ou plusieurs phases de ce stator afin de générer les premiers et les seconds champs magnétiques statoriques nécessaires respectivement au fonctionnement des premier et second dispositifs électriques. Par contre, plusieurs solutions sont possibles sur chaque rotor de cette machine électrique réversible afin de générer le premier et le second champs magnétiques rotoriques.

Selon un mode de réalisation de l'invention, le premier rotor comporte des premiers aimants permanents. En effet, les machines électriques à aimants permanents sont les plus performantes grâce au couple permanent généré par ces aimants permanents au rotor permettant d'avoir peu de perte et donc un rendement élevé. De fait, les premiers aimants étant permanents, aucun apport d'énergie n'est nécessaire pour créer le champ magnétique rotorique correspondant, et par suite, les pertes par effet Joule sont réduites.

De plus, l'utilisation du premier moyen d'accouplement débrayable permet à la machine électrique réversible en mode génératrice d'avoir un rendement optimisé de la machine et donc d'avoir une puissance massique maximale, car les pertes par effet Joule étant minimisées. L'utilisation d'un moyen de refroidissement, dont la masse peut être conséquente, peut être limitée, voire non nécessaire.

Cependant le premier rotor peut également comporter des premiers aimants non permanents en lieu et place des aimants permanents. Ces aimants non permanents sont réalisés, par exemple, par un ou plusieurs enroulements de conducteurs électriques, tels des bobinages. Un courant électrique continu doit alors alimenter ces bobinages afin de créer le premier champ magnétique rotorique. Le courant continu peut être délivré par un ou plusieurs générateurs de courant électrique, tel qu'une batterie ou un condensateur, présent dans le véhicule dans lequel est installée la machine électrique réversible.

Par contre, le premier dispositif électrique avec un premier rotor comportant des premiers aimants non permanents est moins performant car il admet plus de pertes, notamment par effet Joule, suite à la création du champ magnétique rotorique par les premiers aimants non permanents par exemple, et donc a un rendement moins élevé qu'un dispositif électrique de mêmes dimensions avec un rotor comportant des aimants permanents. Pour avoir le même couple, ce premier dispositif électrique avec un premier rotor comportant des aimants non permanents doit être de dimensions plus importantes et par suite d'une masse plus importante.

De plus, afin de maximiser le couple fourni par le premier dispositif électrique en mode moteur, les premiers aimants du premier rotor, qu'ils soient permanents ou non permanents, tournent à l'extérieur du premier stator. De la sorte, le couple magnétique du rotor est plus important que si les aimants étaient placés à l'intérieur du stator, et par suite, le couple fourni par le premier dispositif électrique en mode moteur est augmenté.

De même, le second rotor peut comporter des seconds aimants permanents. Ces seconds aimants du second rotor tournent à l'intérieur du second stator, le couple magnétique du rotor étant alors moins important que si les aimants étaient placés à l'extérieur du stator, et par suite, les effets du couple magnétique généré par ces aimants permanents en mode génératrice et donc la puissance électrique et mécanique produites, sont réduits.

Afin de minimiser ce couple magnétique, le second rotor peut également comporter des seconds aimants non permanents en lieu et place des aimants permanents.

Cependant, l'utilisation d'aimants non permanents au rotor permet, en faisant varier le courant circulant dans les bobinages du rotor, d'une part de supprimer le champ magnétique rotorique, contrairement aux dispositifs à aimants permanents, et par suite de supprimer le couple résistant en cas de court-circuit d'un bobinage du stator, et d'autre part d'ajuster le champ magnétique rotorique suivant le réel besoin et donc d'avoir moins de perte en mode génératrice.

Il est également possible d'utiliser des aimants permanents et des aimants non permanents au sein de la même machine électrique réversible. Par exemple, des premiers aimants permanents peuvent être utilisés au niveau du premier rotor alors que des seconds aimants non permanents sont utilisés au niveau du second rotor.

Selon un mode de réalisation de l'invention, les premiers aimants du premier rotor tournent à l'extérieur du premier stator et les seconds aimants du second rotor tournent à l'intérieur du second stator. Il est alors possible de regrouper les premier et second stators afin de former un seul et même stator comportant un ou plusieurs enroulements de conducteurs électriques formant une ou plusieurs phases du stator avec lequel coopèrent le premier rotor et le second rotor. Avantageusement, la machine électrique réversible ne comportant qu'un seul stator peut être de dimensions et de masse réduites. De plus, pour tourner autour du même stator, les premier et second rotors doivent également tourner autour du même axe de rotation. Enfin, l'utilisation d'un ou plusieurs enroulements de conducteurs électriques sur un seul stator permet de réduire le coût de cette machine électrique réversible et sa maintenance tout en d'augmentant sa fiabilité.

Selon un mode de réalisation préféré de l'invention, le premier rotor et le second rotor tournent respectivement à l'extérieur et à l'intérieur d'un seul et même stator. De plus, les premiers aimants du premier rotor et les seconds aimants du second rotor sont des aimants permanents.

Le premier moyen d'accouplement comporte alors un arbre intermédiaire et un troisième moyen d'accouplement débrayable reliant mécaniquement le premier rotor et cet arbre intermédiaire. Cet arbre intermédiaire est solidaire de l'arbre de sortie de la machine électrique réversible, de sorte que ce premier rotor est lié mécaniquement à l'arbre de sortie par l'intermédiaire du troisième moyen d'accouplement et de l'arbre intermédiaire.

De plus, le premier moyen d'accouplement comporte également le second moyen d'accouplement de la machine électrique réversible. De la sorte, ce premier rotor est lié mécaniquement au second rotor par l'intermédiaire des second et troisième moyens d'accouplement, de l'arbre intermédiaire et de l'arbre de sortie.

Cet arbre intermédiaire peut également être constitué par une extrémité de cet arbre de sortie. Dans ce cas, le troisième moyen d'accouplement débrayable relie mécaniquement le premier rotor et l'arbre de sortie.

De fait, lorsque le troisième moyen d'accouplement est embrayé, le premier rotor est lié mécaniquement à l'arbre intermédiaire, lui-même lié mécaniquement au second rotor par l'intermédiaire de l'arbre de sortie et du second moyen d'accouplement qui est embrayé. Ainsi, le premier rotor est solidarisé au second rotor.

Inversement, lorsque le troisième moyen d'accouplement est débrayé, le premier rotor n'est plus lié mécaniquement à l'arbre intermédiaire, et par suite désolidarisé du second rotor.

Pour permettre le fonctionnement du premier moyen d'accouplement précédemment évoqué, le troisième moyen d'accouplement est embrayé lorsque la machine électrique réversible fonctionne en mode moteur et débrayé lorsque la machine électrique fonctionne en mode génératrice.

Ainsi, en cas de freinage du premier dispositif électrique, le premier moyen d'accouplement est débrayé et ce freinage du premier dispositif électrique ne se transmet ni à l'arbre intermédiaire, ni à l'arbre de sortie, ni au second dispositif électrique. Par suite, aucune dégradation n'est engendrée par ce freinage du premier dispositif électrique aux éléments liés à cet arbre de sortie. De plus, la machine électrique réversible peut continuer de fonctionner en mode moteur ou bien en mode génératrice par l'intermédiaire du second dispositif électrique.

De plus, en cas de freinage du second dispositif électrique, le second moyen d'accouplement doit être débrayé afin que ce freinage du second dispositif électrique ne se transmette pas à l'arbre de sortie. Ainsi aucune dégradation n'est engendrée par ce blocage du second dispositif électrique aux éléments liés à cet arbre de sortie.

Avantageusement, le premier dispositif est alors toujours lié mécaniquement à l'arbre de sortie par l'intermédiaire du troisième moyen d'accouplement et de l'arbre intermédiaire. Ainsi, la machine électrique réversible peut, selon ce mode de réalisation préféré, continuer de fonctionner, uniquement en mode moteur, par l'intermédiaire du premier dispositif électrique.

Le débrayage du second moyen d'accouplement est réalisé de façon automatique, à partir d'un premier effort prédéterminé. Dans ce mode de réalisation préféré, le premier rotor étant lié directement à l'arbre de sortie par l'intermédiaire du troisième moyen d'accouplement et de l'arbre intermédiaire, le couple du premier dispositif en mode moteur n'est pas transmis au second moyen d'accouplement. De fait, ce second moyen d'accouplement transmet d'une part le couple fournit à l'arbre de sortie uniquement par le second dispositif électrique en mode moteur, et d'autre part le couple fournit par l'arbre de sortie' au second dispositif électrique.

Avantageusement, ce second moyen d'accouplement ne transmettant pas le couple du premier dispositif électrique en mode moteur, le premier effort prédéterminé de débrayage du second moyen d'accouplement peut être réduit. Par suite, lés dimensions de ce second moyen d'accouplement peuvent également être réduites.

Par exemple, si ce couple moteur du second dispositif électrique représente 10% du couple du premier dispositif électrique en mode moteur, le premier effort prédéterminé du second moyen d'accouplement peut être réduit de 90% dans ce mode de réalisation préféré par rapport à un mode dans lequel le second moyen d'accouplement transmet le couple total de la machine électrique réversible en mode moteur.

Le troisième moyen d'accouplement est par exemple une roue libre permettant au premier rotor de se solidariser à l'arbre intermédiaire, et par suite à l'arbre de sortie et au second rotor, dans un sens de rotation et de se désolidariser de l'arbre de sortie, et par suite du second rotor, dans l'autre sens de rotation, le second moyen d'accouplement étant embrayé dans les deux cas.

De plus, l'utilisation d'une roue libre, qui est un moyen d'accouplement débrayable simple, fiable et peu coûteux, permet la réalisation de machines électriques réversibles également fiables et d'un coût réduit.

La machine électrique réversible ainsi obtenue permet d'avoir un fonctionnement en mode moteur avec un couple important, tout en minimisant le couple magnétique en mode génératrice. De plus, cette machine électrique réversible est relativement compacte, grâce à l'utilisation d'un seul stator, d'un second et d'un troisième moyens d'accouplement simples. Enfin, ces éléments permettent d'obtenir une machine électrique réversible d'un coût réduit, d'une fiabilité optimisée et d'une maintenance réduite.

Selon un mode de réalisation de l'invention, la machine électrique réversible comporte un seul stator. Le premier rotor est formé par des premiers aimants non permanents, tels des bobinages alimentés en courant électrique continu et tournant à l'extérieur du stator, et le second rotor est formé par des seconds aimants non permanents, tels des bobinages alimentés en courant électrique continu et tournant à l'intérieur du stator. De plus, les premiers aimants non permanents et les seconds aimants non permanents sont liés mécaniquement en rotation autour de l'axe de rotation commun des premier et second rotors.

Le courant électrique continu alimentant les premiers et seconds aimants non permanents peut être délivré par un générateur de courant électrique présent dans le véhicule dans lequel est installée la machine électrique réversible.

Ainsi, lorsque les premiers aimants non permanents et les seconds aimants non permanents sont alimentés en courant électrique continu, les champs magnétiques des premier et second rotors sont accrochés par le champ magnétique statorique tournant, et par suite le premier et le second rotor tournent ensemble autour de l'axe de rotation de la machine électrique. Par contre en mode génératrice, quand seuls les seconds aimants non permanents sont alimentés en courant électrique continu, seul le champ magnétique du second rotor crée un champ magnétique tournant et crée des courants induits au stator et par suite génère le courant électrique juste nécessaire en mode génératrice.

De fait, le premier moyen d'accouplement comporte un moyen d'inhibition permettant de couper l'alimentation électrique des premiers aimants non permanents, les seconds aimants non permanents étant toujours alimentés électriquement. Ainsi, le premier moyen d'accouplement est embrayé lorsque les premiers aimants non permanents sont alimentés électriquement afin de transmettre le couple au premier rotor et au second rotor en mode moteur alors que le premier moyen d'accouplement est débrayé lorsque le moyen d'inhibition coupe l'alimentation électrique des premiers aimants non permanents afin d'ajuster au stricte nécessaire le besoin électrique en mode génératrice et par suite d'avoir moins de perte.

De la sorte, la machine électrique transmet le couple maximal en mode moteur lorsque les premiers et seconds aimants sont alimentés électriquement alors que la machine électrique transmet le couple minimal en mode génératrice lorsque le moyen d'inhibition coupe l'alimentation électrique des premiers aimants optimisant ainsi le rendement de la machine électrique réversible.

Les premiers aimants non permanents et les seconds aimants non permanents peuvent être liés mécaniquement de façon permanente en rotation autour de l'axe de rotation commun des premier et second rotors. De fait, lorsque le second moyen d'accouplement est débrayé, suite à un blocage par exemple du premier ou du second dispositif électrique, le premier et le second rotors sont désolidarisés de l'arbre de sortie et la machine électrique réversible ne fonctionne ni en mode moteur, ni en mode génératrice.

Selon une variante de ce mode de réalisation de l'invention, le premier moyen d'accouplement comporte également le second moyen d'accouplement et un quatrième moyen d'accouplement. De fait, les premiers aimants non permanents et les seconds aimants non permanents peuvent être liés mécaniquement en rotation autour de l'axe de rotation commun des premier et second rotors par l'intermédiaire de ces second et quatrième moyens d'accouplement et de l'arbre de sortie.

Ce quatrième moyen d'accouplement peut être débrayable sous un second effort prédéterminé, permettant de désolidariser le premier rotor de l'arbre de sortie en cas de blocage du premier dispositif électrique. Ainsi, la machine électrique reste fonctionnelle par l'intermédiaire du second dispositif qui est relié à l'arbre de sortie par le second moyen d'accouplement.

Ce quatrième moyen d'accouplement peut comporter un élément fusible, tel une goupille ou une clavette, liant en rotation, par exemple, un alésage solidaire du premier rotor dans lequel l'arbre de sortie est positionné et cet arbre de sortie. Cet élément fusible est défini pour rompre sous le second effort prédéterminé afin de désolidariser l'alésage et l'arbre de sortie, et par suite le premier rotor de l'arbre de sortie.

De même, en cas de blocage du second dispositif électrique, le second moyen d'accouplement étant débrayable sous le premier effort prédéterminé permet de désolidariser le second rotor de l'arbre de sortie. Ainsi, la machine électrique reste fonctionnelle, uniquement en mode moteur, par l'intermédiaire du premier dispositif qui est relié à l'arbre de sortie par le quatrième moyen d'accouplement.

Avantageusement, cette variante permet donc en cas de blocage du premier ou du second dispositif électrique de maintenir, au moins partiellement, la machine électrique réversible fonctionnelle.

De plus, le premier effort prédéterminé doit être supérieur au couple maximum transmis par le second dispositif électrique et inférieur au couple de freinage de ce second dispositif électrique.

De même, le second effort prédéterminé doit être supérieur au couple maximum transmis par le premier dispositif électrique et inférieur au couple de freinage de ce premier dispositif électrique.

Ainsi, le premier effort et le second efforts prédéterminés sont indépendants l'un de l'autre et peuvent, dans cette variante, être optimisés afin de réduire les dimensions et la masse de cette machine électrique réversible.

Quelque soit le mode de réalisation de l'invention, les aimants permanents ou non permanents peuvent être orientés radialement ou bien axialement par rapport à l'axe de rotation de la machine électrique. Ces différentes orientations des aimants permettent d'orienter le flux magnétique circulant dans la machine électrique, qui est alors radial ou axial. Sur une même machine électrique, il est également possible d'utiliser des aimants orientés radialement et d'autres aimants orientés axialement.

Par ailleurs, la machine électrique réversible selon l'invention peut être utilisée dans différents types de véhicules. De préférence, la machine électrique réversible est utilisée dans un aéronef à voilure tournante. Un tel aéronef comporte une installation motrice hybride et au moins un rotor principal.

Cette installation motrice hybride comporte au moins un moteur thermique, au moins une machine électrique réversible précédemment décrite et une boîte de transmission principale de puissance. Dans le cas de l'hybridation parallèle, l'arbre de sortie de la machine électrique réversible peut être lié mécaniquement à cette boîte de transmission principale de puissance, elle-même liée au rotor principal de cet aéronef. Pour la micro-hybridation, l'arbre de sortie de la machine électrique réversible peut être lié mécaniquement au compresseur d'un turbomoteur composant le moteur thermique.

L'invention et ses avantages apparaîtront avec plus de détails dans le cadre de la description qui suit avec des exemples de réalisation donnés à titre illustratif en référence aux figures annexées qui représentent :
- les figures 1 à 5, plusieurs modes de réalisation de la machine électrique réversible selon l'invention,
- la figure 6, un aéronef à voilure tournante équipé d'une hybridation parallèle avec une machine électrique réversible, et
- La figure 7, un aéronef à voilure tournant équipé d'une micro-hybridation avec une machine électrique réversible.

Les éléments présents dans plusieurs figures distinctes sont affectés d'une seule et même référence.

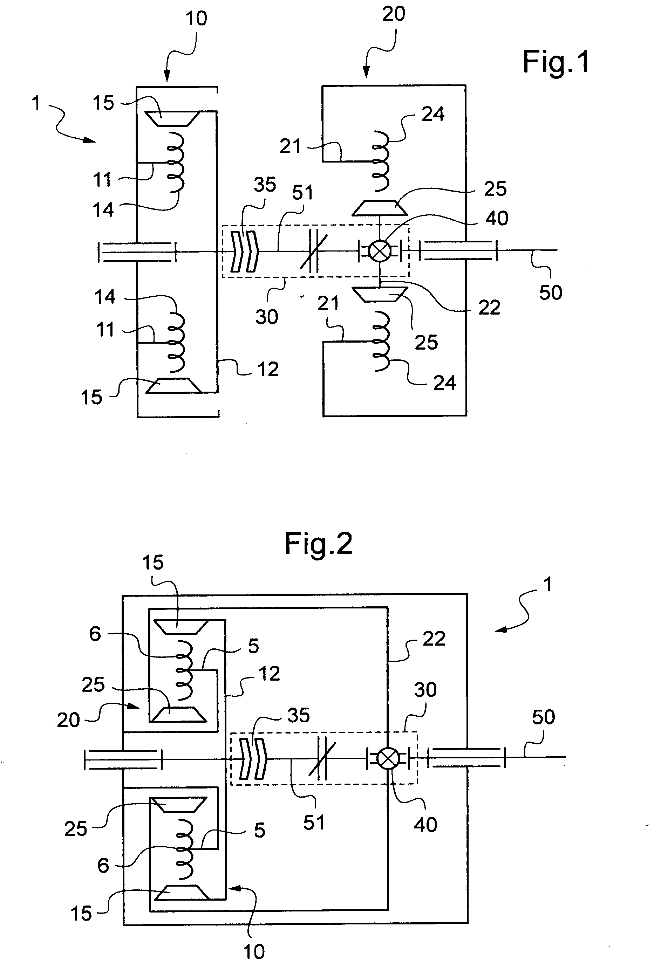

La figure 1 décrit un mode de réalisation d'une machine électrique réversible 1 selon l'invention comportant un premier dispositif électrique 10, un second dispositif électrique 20, un premier moyen d'accouplement 30 débrayable et un arbre de sortie 50. Le premier dispositif 10 est un moteur et comporte un premier rotor 12 coopérant avec un premier stator 11. De même, le second dispositif 20 comporte un second rotor 22 coopérant avec un second stator 21, mais ce second dispositif est un moteur générateur. Chaque stator 11,21 est muni d'aimants non permanents 14,24 composé d'un ou plusieurs enroulements de fils conducteurs permettant de générer au moins un champ magnétique statorique lorsqu'il est parcouru par un courant électrique. Chaque rotor 12,22 est muni d'aimants permanents 15,25 générant respectivement un premier et un second champs magnétiques rotoriques.

Sur la figure 1, comme sur l'ensemble des figures, les aimants non permanents 14,24 et permanents 15,25 sont orientés radialement par rapport à l'axe de rotation de chaque rotor 12,22, permettant ainsi une circulation du flux magnétique de façon radiale entre les aimants non permanents 14,24 des stators 11,21 et les aimants permanents 15,25 des rotors 12,22.

Cependant, ces aimants 14,24,15,25 peuvent également être orientés axialement par rapport à l'axe de rotation de chaque rotor 12,22, la circulation du flux magnétique étant alors axiale entre les aimants 14,24 et les aimants 15,25.

Il est également possible, sur une machine électrique réversible 1, d'agencer une partie de ces aimants 14,24 axialement et une autre partie de ces aimants 14,24 radialement par rapport à l'axe de rotation de chaque rotor 12,22. De même, une partie des aimants 15,25 sont orientés axialement et une autre partie des aimants 15,25 sont orientés radialement.

De plus, les aimants non permanents 14,24 de chaque stator 11,21 peuvent être composés d'un ou plusieurs enroulements de fils conducteurs formant respectivement une ou plusieurs phases, qui peuvent alors générer respectivement un ou plusieurs champs magnétiques statoriques.

De plus, le premier moyen d'accouplement débrayable 30, relie mécaniquement le premier rotor 12 et le second rotor 22. Un second moyen d'accouplement 40, débrayable sous un premier effort prédéterminé, relie mécaniquement le second rotor 22 et l'arbre de sortie 50. Cet arbre de sortie peut être lié à la transmission d'un véhicule, par exemple une boite de transmission principale de puissance d'un aéronef à voilure tournante.

Le premier rotor 12 tourne à l'extérieur du premier stator 11 alors que le second rotor 22 tourne à l'intérieur du second stator 21, le premier rotor 12 et le second rotor 22 ayant le même axe de rotation. De fait, le premier dispositif électrique 10 est capable de fournir un couple mécanique important en mode moteur alors que le second dispositif électrique est capable de fournir un couple mécanique plus faible en mode moteur et un faible couple magnétique en mode génératrice.

La machine électrique réversible 1 peut fonctionner aussi bien en mode moteur, tel que la machine électrique réversible 1 transforme la puissance électrique qu'elle reçoit en puissance mécanique qu'elle fournit à l'arbre de sortie 50, qu'en mode génératrice, tel que l'arbre de sortie 50 fournit une puissance mécanique que la machine électrique réversible 1 transforme en puissance électrique.

Le premier moyen d'accouplement 30 comporte un arbre intermédiaire 51, le second moyen d'accouplement 40 et un troisième moyen d'accouplement 35 débrayable. L'arbre intermédiaire 51 est solidaire de l'arbre de sortie 50 et le troisième moyen d'accouplement 35 relie mécaniquement le premier rotor 12 et l'arbre intermédiaire 51. De la sorte, le premier rotor 12 est lié mécaniquement à l'arbre de sortie 50 lorsque le troisième moyen d'accouplement 35 est embrayé, permettant également au premier rotor 12 d'être lié mécaniquement au second rotor 22 par l'intermédiaire du second moyen d'accouplement 40 débrayable sous un premier effort prédéterminé.

Le troisième moyen d'accouplement 35 comporte une roue libre permettant au premier rotor 12 de se solidariser à l'arbre intermédiaire 51, et par suite au second rotor 22, dans un sens de rotation et de se désolidariser de cet arbre intermédiaire 51, et par suite du second rotor 22, dans l'autre sens de rotation, le second moyen d'accouplement 40 étant embrayé.

Le premier accouplement débrayable 30 permet ainsi au premier rotor 12 d'entraîner en rotation, lorsque le premier dispositif 10 est en mode moteur, l'arbre de sortie 50. Dans ce mode moteur de la machine électrique réversible 1, le second dispositif électrique 20 peut également être en mode moteur et fournir un complément de puissance mécanique à l'arbre de sortie 50.

Inversement, lorsque la machine électrique réversible 1 fonctionne en mode génératrice, le second dispositif 20 reçoit la puissance mécanique de l'arbre de sortie 50 par l'intermédiaire du second moyen d'accouplement 40, et par suite du second rotor 22. Avantageusement, le troisième moyen d'accouplement 35 est débrayé dans ce mode de fonctionnement, et par suite le premier moyen d'accouplement 30 est débrayé également. Le premier dispositif électrique 10 est alors désolidarisé de l'arbre de sortie 50, et par suite du second dispositif électrique 20 et ne fonctionne donc pas en mode génératrice. Par suite, aucun couple résistant dû aux aimants permanents 15 du premier rotor 11 n'apparaît dans la machine électrique réversible 1. En conséquence le rendement de la transformation de l'énergie mécanique de l'arbre de sortie 50 en énergie électrique est optimisé.

La figure 2 décrit un mode de réalisation préféré de la machine électrique 1 qui ne comporte qu'un seul stator 5, remplaçant le premier et le second stators 11,21 de la figure 1, le premier moyen d'accouplement 30, le second moyen d'accouplement 40 et l'arbre de sortie 50 étant inchangés par rapport au mode de réalisation représenté sur la figure 1. Le seul stator 5 est muni d'un ou plusieurs enroulements 6 de fils conducteurs permettant de générer au moins un champ magnétique statorique lorsqu'il est parcouru par un courant électrique. Le premier rotor 12 et le second rotor 22 tournent respectivement à l'extérieur et à l'intérieur du stator 5, le premier rotor 12 et le second rotor 22 ayant le même axe de rotation. Chaque rotor 12,22 comporte des aimants permanents 15,25 générant respectivement un premier et un second champs magnétiques rotoriques.

Avantageusement, l'utilisation du seul stator 5 pour coopérer avec le premier rotor 12 et le second rotor 22 permet de réduire les dimensions et la masse de la machine électrique ainsi que son coût.

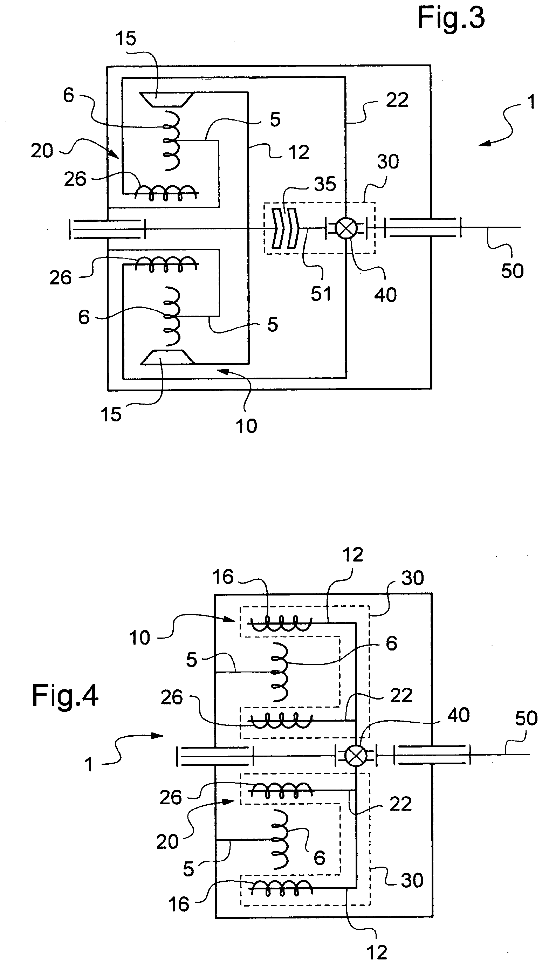

La figure 3 décrit un autre mode de réalisation de la machine électrique 1 qui ne comporte qu'un seul stator 5 muni d'un ou plusieurs enroulements 6 de fils conducteurs. Le premier rotor 12 et le second rotor 22 tournent respectivement à l'extérieur et à l'intérieur du stator 5, le premier rotor 12 et le second rotor 22 ayant le même axe de rotation.

Contrairement au mode de réalisation préféré, le premier rotor 12 comporte des aimants permanents 15 alors que le second rotor 22 comporte des aimants non permanents 26 constitués par exemple par des bobinages de fils conducteurs où circule un courant électrique continu délivré par une batterie ou des condensateurs. Ainsi le rotor 12 génère en permanence un premier champ magnétique rotorique alors que le rotor 22 est capable de générer un second champ magnétique rotorique uniquement lorsque les aimants non permanents 26 sont traversé par un courant électrique continu.

Là encore, un premier moyen d'accouplement débrayable 30, comporte un arbre intermédiaire 51, le second moyen d'accouplement 40 et un troisième moyen d'accouplement 35 débrayable. L'arbre intermédiaire 51 constitue alors une extrémité de l'arbre de sortie 50 et le troisième moyen d'accouplement 35 relie mécaniquement le premier rotor 12 et cette extrémité de l'arbre de sortie 50. De la sorte, le premier rotor 12 est lié mécaniquement à l'arbre de sortie lorsque le troisième moyen d'accouplement 35 est embrayé, permettant ainsi au premier rotor 12 d'être lié mécaniquement au second rotor 22 par l'intermédiaire du second moyen d'accouplement 40.

Avantageusement, l'utilisation des aimants non permanents 26 sur le second rotor 22 permet d'annuler complètement le couple magnétique, en coupant l'alimentation électrique des bobinages constituant les aimants non permanents 26 dans le cas où le freinage du second rotor n'est pas suffisant pour débrayer le second moyen d'accouplement 40 lors d'un court-circuit.

De plus, l'utilisation des aimants permanents 15 au niveau du premier rotor 12 permet d'obtenir les meilleurs performances en mode moteur, le troisième moyen d'accouplement 35 assurant la désolidarisation de ce premier rotor 12 de l'arbre de sortie 50 en cas de freinage de ce premier rotor 12 suite par exemple à un court-circuit au niveau des bobinages 6 du stator 5.

De plus, l'utilisation du seul stator 5 pour coopérer avec le premier rotor 12 et le second rotor 22 permet de réduire les dimensions et la masse de la machine électrique réversible 1 ainsi que son coût.

Un autre mode de réalisation de la machine électrique réversible 1 est représenté sur la figure 4. La machine électrique réversible 1 comporte un seul stator 5 et le premier rotor 12 est formé par des premiers aimants non permanents 16 tels des bobinages alimentés en courant électrique continu et tournant à l'extérieur du stator 5 alors que le second rotor 22 est formé par des seconds aimants non permanents 26 tels des bobinages alimentés en courant électrique continu et tournant à l'intérieur du stator 5. De plus, les premiers aimants non permanents 16 et les seconds aimants non permanents 26 sont liés mécaniquement en rotation de façon permanente autour de l'axe de rotation commun des premier et second rotors 12,22.

Le premier moyen d'accouplement 30 comporte alors un moyen d'inhibition permettant de couper l'alimentation électrique des premiers aimants non permanents 16, les seconds aimants non permanents 26 étant toujours alimentés électriquement. De fait, lorsque le premier moyen d'accouplement 30 est embrayé, les premiers aimants non permanents 16 et les seconds aimants non permanents 26 sont alimentés en courant électrique continu, et transmettent un couple au premier rotor 12 et au second rotor 22 en mode moteur. Ainsi les premier et second rotor 12,22 tournent ensemble autour de leur axe de rotation et permettent à la machine électrique 1 de fournir le couple maximal en mode moteur.

Par contre, quand le premier moyen d'accouplement 30 est débrayé, c'est-à-dire que le moyen d'inhibition coupe l'alimentation électrique des premiers aimants non permanents 16, seuls les seconds aimants non permanents 26 du second rotor 22 sont alimentés en courant électrique continu. En conséquence, seul le second rotor 22 crée un champ magnétique rotorique, et par suite tourne autour de son axe de rotation, permettant ainsi à la machine électrique 1 de fournir la puissance électrique juste nécessaire en mode génératrice.

Ainsi, ce mode de réalisation de la machine électrique réversible 1 permet de supprimer notamment le troisième moyen d'accouplement 35 du mode de réalisation préféré réduisant ainsi le nombre de composants de la machine électrique réversible 1, et par suite sa masse et son coût. De plus, ce mode de réalisation est particulièrement intéressant quand le couple résistant créé lors d'un court-circuit au niveau du bobinage 6 du stator 5 ne permet pas de débrayer le second moyen d'accouplement 40 sous un premier effort prédéterminé.

Par contre, les premiers aimants non permanents 16 et les seconds aimants non permanents 26 étant liés mécaniquement en rotation de façon permanente, un blocage du premier ou du second dispositif électrique 10,20 entraine le débrayage du second moyen d'accouplement 40, et par suite la perte des fonctions moteur et génératrice de la machine électrique réversible 1.

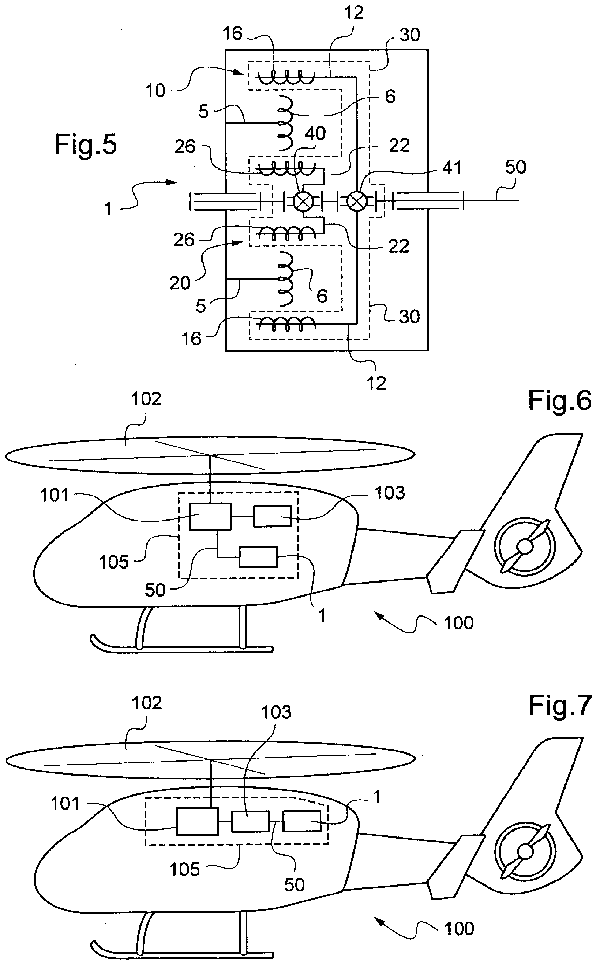

Selon une variante de ce mode de réalisation de l'invention représenté sur la figure 5, le premier moyen d'accouplement 30 comporte, en plus du moyen d'inhibition, le second moyen d'accouplement 40 et un quatrième moyen d'accouplement 41 débrayable. Le fonctionnement normal de la machine électrique réversible 1 selon cette variante est inchangée et obtenu notamment par l'intermédiaire du moyen d'inhibition permettant de couper ou non l'alimentation électrique des premiers aimants non permanents 16.

Par contre, les premiers aimants non permanents 16 et les seconds aimants non permanents 26 ne sont pas liés mécaniquement en rotation de façon permanente, mais par l'intermédiaire de ces second et quatrième moyens d'accouplement 40,41qui sont débrayables et de l'arbre de sortie 50.

Ce quatrième moyen d'accouplement 41 est débrayable sous un second effort prédéterminé, permettant de désolidariser le premier rotor 12 de l'arbre de sortie 50 en cas de blocage du premier dispositif électrique 10. Ainsi, la machine électrique réversible 1 reste fonctionnelle par l'intermédiaire du second dispositif 20 qui est relié à l'arbre de sortie 50 par le second moyen d'accouplement 40.

De même, en cas de blocage du second dispositif électrique 20, le second moyen d'accouplement 40 permet de désolidariser le second rotor 22 de l'arbre de sortie 50. Ainsi, la machine électrique 1 reste fonctionnelle, uniquement en mode moteur, par l'intermédiaire du premier dispositif 10 qui est relié à l'arbre de sortie 50 par le quatrième moyen d'accouplement 41.

Avantageusement, cette variante permet donc en cas de blocage du premier ou du second dispositif électrique 10,20, de maintenir au moins partiellement la machine électrique réversible 1 fonctionnelle.

Par ailleurs, la machine électrique réversible 1 selon l'invention peut être utilisée dans différents types de véhicules. De préférence, la machine électrique réversible 1 est utilisée dans un aéronef 100 à voilure tournante. Un tel aéronef 100 est représenté sur les figures 6 et 7 et comporte une installation motrice hybride 105 et au moins un rotor principal 102.

Cette installation motrice hybride 105 comporte au moins un moteur thermique 103, au moins une machine électrique réversible 1 précédemment décrite et une boîte de transmission principale de puissance 101 liée au rotor principal 102 de cet aéronef 100.

Dans le cas d'une hybridation parallèle, représenté sur la figure 6, l'arbre de sortie 50 de la machine électrique réversible 1 est lié mécaniquement à cette boîte de transmission principale de puissance 101.

Dans le cas d'une micro-hybridation, représenté sur la figure 7, l'arbre de sortie 50 de la machine électrique réversible 1 est lié mécaniquement au moteur thermique 103 et plus précisément à un compresseur de ce moteur thermique 103. Ce moteur thermique 103 comporte également une turbine libre qui est liée mécaniquement à la boite de transmission principale 101.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Machine électrique réversible (1) comportant :
- un premier dispositif électrique (10) muni d'un premier rotor (12) coopérant avec un premier stator (11),
- un second dispositif électrique (20) comportant un second rotor (22) coopérant avec un second stator (21),
- un premier moyen d'accouplement (30) débrayable permettant de solidariser ou désolidariser en rotation lesdits premier et second rotors (12,22) et
- un arbre de sortie (50),
**caractérisée en ce que** ladite machine électrique réversible (1) comporte un second moyen d'accouplement (40) débrayable sous un premier effort prédéterminé et reliant mécaniquement ledit second rotor (22) audit arbre de sortie (50), ledit premier dispositif électrique (10) étant un moteur transmettant une puissance mécanique audit arbre de sortie (50) et ledit second dispositif électrique (20) étant un moteur-générateur transmettant en mode moteur une puissance mécanique complémentaire audit arbre de sortie (50) et recevant en mode génératrice une puissance mécanique dudit arbre de sortie (50).

2. Machine électrique réversible (1) selon la revendication 1,
**caractérisée en ce que** ledit premier rotor (12) comporte des premiers aimants permanents (15).

3. Machine électrique réversible (1) selon l'une quelconque des revendications 1 à 2,
**caractérisée en ce que** ledit second rotor (22) comporte des seconds aimants permanents (25).

4. Machine électrique réversible (1) selon l'une quelconque des revendications 1 à 3,
**caractérisée en ce que** ledit premier rotor (12) comporte des premiers aimants non permanents (16).

5. Machine électrique réversible (1) selon l'une quelconque des revendications 1 à 4,
**caractérisée en ce que** ledit second rotor (22) comporte des seconds aimants non permanents (26).

6. Machine électrique réversible (1) selon l'une quelconque des revendications 1 à 5,
**caractérisée en ce que**, ledit premier rotor (12) et ledit second rotor (22) tournant autour du même axe de rotation, ledit premier moyen d'accouplement (30) comporte un arbre intermédiaire (51), ledit second moyen d'accouplement (40) et un troisième moyen d'accouplement (35) débrayable reliant mécaniquement ledit premier rotor (12) et ledit arbre intermédiaire (51), ledit arbre intermédiaire (51) étant solidaire dudit arbre de sortie (50) permettant ainsi audit premier rotor (12) d'être lié mécaniquement audit second rotor (22).

7. Machine électrique réversible (1) selon la revendication 6,
**caractérisée en ce que**, ledit troisième moyen d'accouplement (35) comporte une roue libre permettant audit premier rotor (12) de se solidariser audit arbre intermédiaire (51), et par suite audit second rotor (22), dans un sens de rotation et de se désolidariser dudit arbre intermédiaire (51), et par suite dudit second rotor (22), dans l'autre sens de rotation, ledit second moyen d'accouplement (40) étant embrayé.

8. Machine électrique réversible (1) selon la revendication 7,
**caractérisée en ce que** ledit arbre intermédiaire (51) constitue une extrémité dudit arbre de sortie (50).

9. Machine électrique réversible (1) selon la revendication 5,
**caractérisée en ce que** ledit premier rotor (12) étant formé par des premiers aimants non permanents (16) alimentés en courant électrique continu et ledit second rotor (22) étant formé par des seconds aimants non permanents (26) alimentés en courant électrique continu, lesdits premiers aimants non permanents (16) et lesdits seconds aimants non permanents (26) étant liés mécaniquement en rotation, ledit premier moyen d'accouplement (30) comporte un moyen d'inhibition permettant de couper l'alimentation électrique desdits premiers aimants non permanents (16), lesdits seconds aimants non permanents (26) étant toujours alimentés en courant électrique.

10. Machine électrique réversible (1) selon la revendication 9,
**caractérisée en ce que** ledit premier moyen d'accouplement (30) comporte ledit second moyen d'accouplement (40) et un quatrième moyen d'accouplement (41) débrayable sous un second effort prédéterminé et reliant mécaniquement ledit premier rotor (12) et ledit arbre de sortie (50), ledit second moyen d'accouplement (40) et ledit quatrième moyen d'accouplement (41) permettant ainsi de lier mécaniquement en rotation ledit premier rotor (12) et ledit second rotor (22) par l'intermédiaire dudit arbre de sortie (50).

11. Machine électrique réversible (1) selon l'une quelconque des revendications 1 à 10,
**caractérisée en ce que** ledit second rotor comportant un alésage (41) solidaire dudit second rotor (22), ledit second moyen d'accouplement (40) comporte un élément fusible (42) liant en rotation ledit alésage (41) et ledit arbre de sortie (50), ledit élément fusible (42) étant défini pour rompre sous ledit premier effort prédéterminé afin de désolidariser ledit alésage (41) dudit arbre de sortie (50).

12. Machine électrique réversible (1) selon l'une quelconque des revendications 1 à 11,
**caractérisée en ce que** lesdits premiers aimants (15,16) dudit premier rotor (12) tournent à l'extérieur dudit premier stator (11).

13. Machine électrique réversible (1) selon l'une quelconque des revendications 1 à 12,
**caractérisée en ce que** lesdits seconds aimants (25,26) dudit second rotor (22) tournent à l'intérieur dudit second stator (21).

14. Machine électrique réversible (1) selon l'une quelconque des revendications 1 à 13,
**caractérisée en ce que** au moins un premier aimant (15,16) est orienté radialement par rapport à l'axe de rotation dudit premier rotor (12) et au moins un second aimant (25,26) est orienté radialement par rapport à l'axe de rotation dudit second rotor (22).

15. Machine électrique réversible (1) selon l'une quelconque des revendications 1 à 14,
**caractérisée en ce qu'**au moins un premier aimant (15,16) est orienté axialement par rapport à l'axe de rotation dudit premier rotor (12) et au moins un second aimant (25,26) est orienté axialement par rapport à l'axe de rotation dudit second rotor (22).

16. Machine électrique réversible (1) comportant :
- un premier dispositif électrique (10) muni d'un premier rotor (12) coopérant avec un stator (5),
- un second dispositif électrique (20) comportant un second rotor (22) coopérant avec ledit stator (5),
- un premier moyen d'accouplement (30) débrayable permettant de solidariser ou désolidariser en rotation lesdits premier et second rotors (12,22) et
- un arbre de sortie (50),
**caractérisée en ce que** ladite machine électrique réversible (1) comporte un second moyen d'accouplement (40) débrayable sous un premier effort prédéterminé et reliant mécaniquement ledit second rotor (22) audit arbre de sortie (50), ledit premier dispositif électrique (10) étant un moteur transmettant une puissance mécanique audit arbre de sortie (50) et ledit second dispositif électrique (20) étant un moteur-générateur transmettant en mode moteur une puissance mécanique complémentaire audit arbre de sortie (50) et recevant en mode génératrice une puissance mécanique dudit arbre de sortie (50).

17. Machine électrique réversible (1) selon la revendication 16,
**caractérisée en ce que** ledit premier moyen d'accouplement (30) comporte un arbre intermédiaire (51), ledit second moyen d'accouplement (40) et un troisième moyen d'accouplement (35) débrayable reliant mécaniquement ledit premier rotor (12) et ledit arbre intermédiaire (51), ledit arbre intermédiaire (51) étant solidaire dudit arbre de sortie (50) permettant ainsi audit premier rotor (12) d'être lié mécaniquement audit second rotor (22).

18. Machine électrique réversible (1) selon la revendication 16,
**caractérisée en ce que** ledit premier rotor (12) étant formé par des premiers aimants non permanents (16) alimentés en courant électrique continu et ledit second rotor (22) étant formé par des seconds aimants non permanents (26) alimentés en courant électrique continu, lesdits premiers aimants non permanents (16) et lesdits seconds aimants non permanents (26) étant liés mécaniquement en rotation, ledit premier moyen d'accouplement (30) comporte un moyen d'inhibition permettant de couper l'alimentation électrique desdits premiers aimants non permanents (16), lesdits seconds aimants non permanents (26) étant toujours alimentés en courant électrique.

19. Machine électrique réversible (1) selon la revendication 16,
**caractérisée en ce que** ledit premier moyen d'accouplement (30) comporte ledit second moyen d'accouplement (40) et un quatrième moyen d'accouplement (41) débrayable sous un second effort prédéterminé et reliant mécaniquement ledit premier rotor (12) et ledit arbre de sortie (50), ledit second moyen d'accouplement (40) et ledit quatrième moyen d'accouplement (41) permettant ainsi de lier mécaniquement en rotation ledit premier rotor (12) et ledit second rotor (22) par l'intermédiaire dudit arbre de sortie (50).

20. Installation motrice hybride (105) d'un aéronef (100) à voilure tournante,
**caractérisée en ce que** ladite installation motrice hybride (105) comporte une boîte de transmission principale de puissance (101) lié à un rotor principal (102) dudit aéronef (100), au moins un moteur thermique (103) lié mécaniquement à ladite boîte de transmission principale de puissance (101) et au moins une machine électrique réversible (1) selon l'une quelconque des revendications 1 à 19 dont ledit arbre de sortie (50) est lié mécaniquement à ladite boîte de transmission principale de puissance (101).

21. Installation motrice hybride (105) d'un aéronef (100) à voilure tournante,
**caractérisée en ce que** ladite installation motrice hybride (105) comporte une boîte de transmission principale de puissance (101) lié à un rotor principal (102) dudit aéronef (100), au moins un moteur thermique (103) muni d'une turbine libre et d'un compresseur ainsi qu'au moins une machine électrique réversible (1) selon l'une quelconque des revendications 1 à 19 dont ledit arbre de sortie (50) est lié mécaniquement audit compresseur dudit moteur thermique (103), ladite turbine libre dudit moteur thermique (103) étant liée mécaniquement à ladite boîte de transmission principale de puissance (101).

## Patentansprüche

1. Reversible elektrische Maschine (1) mit:
- einer ersten elektrischen Vorrichtung (10), die mit einem ersten Rotor (12) versehen ist, der mit einem ersten Stator (11) zusammenwirkt,
- einer zweiten elektrischen Vorrichtung (20) mit einem zweiten Rotor (22), der mit einem zweiten Stator (21) zusammenwirkt,
- einem ersten ausrückbaren Kupplungsmittel (30), das es erlaubt, den ersten und den zweiten Rotor (12, 22) durch eine Drehbewegung fest miteinander zu verbinden oder voneinander zu lösen, und
- einer Ausgangswelle (50),
**dadurch gekennzeichnet, dass** die reversible elektrische Maschine (1) ein zweites Kupplungsmittel (40) aufweist, das unter Einwirkung einer ersten vorbestimmten Kraft ausrückbar ist und den zweiten Rotor (22) mit der Ausgangswelle (50) mechanisch verbindet, wobei die erste elektrische Vorrichtung (10) ein Motor ist, der eine mechanische Leistung auf die Ausgangswelle (50) überträgt, und die zweite elektrische Vorrichtung (20) ein Motor-Generator ist, der im Motormodus eine zusätzliche mechanische Leistung auf die Ausgangswelle (50) überträgt und im Generatormodus eine mechanische Leistung der Ausgangswelle (50) aufnimmt.

2. Reversible elektrische Maschine (1) nach Anspruch 1,
**dadurch gekennzeichnet, dass** der erste Rotor (12) erste Permanentmagneten (15) aufweist.

3. Reversible elektrische Maschine (1) nach einem der Ansprüche 1 bis 2,
**dadurch gekennzeichnet, dass** der zweite Rotor (22) zweite Permanentmagneten (25) aufweist.

4. Reversible elektrische Maschine (1) nach einem der Ansprüche 1 bis 3,
**dadurch gekennzeichnet, dass** der erste Rotor (12) erste Nichtpermanentmagneten (16) aufweist.

5. Reversible elektrische Maschine (1) nach einem der Ansprüche 1 bis 4,
**dadurch gekennzeichnet, dass** der zweite Rotor (22) zweite Nichtpermanentmagneten (26) aufweist.

6. Reversible elektrische Maschine (1) nach einem der Ansprüche 1 bis 5,
**dadurch gekennzeichnet, dass** der erste Rotor (12) und der zweite Rotor (22) sich um dieselbe Rotationsachse drehen, wobei das erste Kupplungsmittel (30) eine Zwischenwelle (51) aufweist, wobei das zweite Kupplungsmittel (40) und ein drittes ausrückbares Kupplungsmittel (35) den ersten Rotor (12) und die Zwischenwelle (51) mechanisch miteinander verbinden, wobei die Zwischenwelle (51) mit der Ausgangswelle (50) fest verbunden ist, was es dem ersten Rotor (12) somit ermöglicht, mit dem zweiten Rotor (22) mechanisch verbunden zu sein.

7. Reversible elektrische Maschine (1) nach Anspruch 6,
**dadurch gekennzeichnet, dass** das dritte Kupplungsmittel (35) einen Freilauf aufweist, der es dem ersten Rotor (12) erlaubt, sich mit der Zwischenwelle (51) und anschließend mit dem ersten Rotor (22) in der einen Drehrichtung fest zu verbinden, und sich von der Zwischenwelle (51) und anschließend von dem zweiten Rotor (22) in der anderen Drehrichtung zu lösen, wobei das zweite Kupplungsmittel (40) eingekuppelt ist.

8. Reversible elektrische Maschine (1) nach Anspruch 7,
**dadurch gekennzeichnet, dass** die Zwischenwelle (51) ein Ende der Ausgangswelle (50) bildet.

9. Reversible elektrische Maschine (1) nach Anspruch 5,
**dadurch gekennzeichnet, dass** der erste Rotor (12) von den ersten Nichtpermanentmagneten (16) gebildet wird, die mit Gleichstrom gespeist sind, und der zweite Rotor (22) von zweiten Nichtpermanentmagneten (26) gebildet wird, die mit Gleichstrom gespeist sind, wobei die ersten Nichtpermanentmagneten (16) und die zweiten Nichtpermanentmagneten (26) mechanisch durch eine Drehbewegung verbunden sind, wobei das erste Kupplungsmittel (30) ein Sperrmittel aufweist, was es erlaubt, die elektrische Stromversorgung der ersten Nichtpermanentmagneten (16) zu unterbrechen, wobei die zweiten Nichtpermanentmagneten (26) immer mit elektrischem Strom versorgt werden.

10. Reversible elektrische Maschine (1) nach Anspruch 9,
**dadurch gekennzeichnet, dass** das erste Kupplungsmittel (30) das zweite Kupplungsmittel (40) und ein viertes Kupplungsmittel (41) umfasst, das unter Einwirkung einer zweiten vorbestimmten Kraft ausrückbar ist und den ersten Rotor (12) und die Ausgangswelle (50) mechanisch verbindet, wobei das zweite Kupplungsmittel (40) und das vierte Kupplungsmittel (41) es somit ermöglichen, den ersten Rotor (12) und den zweiten Rotor (22) über die Ausgangswelle (50) durch eine Drehbewegung mechanisch miteinander zu verbinden.

11. Reversible elektrische Maschine (1) nach einem der Ansprüche 1 bis 10,
**dadurch gekennzeichnet, dass** der zweite Rotor eine Bohrung (41) aufweist, die mit dem zweiten Rotor (22) fest verbunden ist, wobei das zweite Kupplungsmittel (40) ein Sicherungselement (42) aufweist, das die Bohrung (41) und die Ausgangswelle (50) durch eine Drehbewegung verbindet, wobei das Sicherungselement (42) so ausgestaltet ist, dass es unter Einwirkung der ersten vorbestimmten Kraft bricht, um die Bohrung (41) der Ausgangswelle (50) zu lösen.

12. Reversible elektrische Maschine (1) nach einem der Ansprüche 1 bis 11,
**dadurch gekennzeichnet, dass** die ersten Magneten (15, 16) des ersten Rotors (12) sich außerhalb des ersten Stators (11) drehen.

13. Reversible elektrische Maschine (1) nach einem der Ansprüche 1 bis 12,
**dadurch gekennzeichnet, dass** die zweiten Magneten (25, 26) des zweiten Rotors (22) sich im Inneren des zweiten Stators (21) drehen.

14. Reversible elektrische Maschine (1) nach einem der Ansprüche 1 bis 13,
**dadurch gekennzeichnet, dass** mindestens ein erster Magnet (15, 16) radial relativ zu einer Drehachse des ersten Rotors (12) ausgerichtet ist, und mindestens ein zweiter Magnet (25, 26) radial bezüglich einer Drehachse des zweiten Rotors (22) ausgerichtet ist.

15. Reversible elektrische Maschine (1) nach einem der Ansprüche 1 bis 14,
**dadurch gekennzeichnet, dass** mindestens ein erster Magnet (15, 16) axial bezüglich der Drehachse des ersten Rotors (12) ausgerichtet ist, und mindestens ein zweiter Magnet (25, 26) axial bezüglich einer Drehachse des zweiten Rotors (22) ausgerichtet ist.

16. Reversible elektrische Maschine (1) mit:
- einer ersten elektrischen Vorrichtung (10), die mit einem ersten Rotor (12) versehen ist, der mit einem Stator (5) zusammenwirkt,
- einer zweiten elektrischen Vorrichtung (20) mit einem zweiten Rotor (22), der mit dem Stator (5) zusammenwirkt,
- einem ersten ausrückbaren Kupplungsmittel (30), das es erlaubt, den ersten und den zweiten Rotor (12, 22) durch eine Drehbewegung fest miteinander zu verbinden oder voneinander zu lösen, und
- einer Ausgangswelle (50),
**dadurch gekennzeichnet, dass** die reversible elektrische Maschine (1) ein zweites Kupplungsmittel (40) aufweist, das unter Einwirkung einer ersten vorbestimmten Kraft ausrückbar ist und den zweiten Rotor (22) mit der Ausgangswelle (50) mechanisch verbindet, wobei die erste elektrische Vorrichtung (10) ein Motor ist, der eine mechanische Leistung auf die Ausgangswelle (50) überträgt, und die zweite elektrische Vorrichtung (20) ein Motor-Generator ist, der im Motormodus eine zusätzliche mechanische Leistung auf die Ausgangswelle (50) überträgt und im Generatormodus eine mechanische Leistung der Ausgangswelle (50) aufnimmt.

17. Reversible elektrische Maschine (1) nach Anspruch 16,
**dadurch gekennzeichnet, dass** das erste Kupplungsmittel (30) eine Zwischenwelle (51) aufweist, wobei das zweite Kupplungsmittel (40) und ein drittes ausrückbares Kupplungsmittel (35) den ersten Rotor (12) und die Zwischenwelle (51) mechanisch verbinden, wobei die Zwischenwelle (51) mit der Ausgangswelle (50) fest verbunden ist, was es dem ersten Rotor (12) somit ermöglicht, mit dem zweiten Rotor (22) mechanisch verbunden zu sein.

18. Reversible elektrische Maschine (1) nach Anspruch 16,
**dadurch gekennzeichnet, dass** der erste Rotor (12) aus den ersten Nichtpermanentmagneten (16) gebildet wird, die mit Gleichstrom gespeist werden, und der zweite Rotor (22) von den zweiten Nichtpermanentmagneten (26) gebildet wird, die mit Gleichstrom gespeist werden, wobei die ersten Nichtpermanentmagneten (16) und die zweiten Nichtpermanentmagneten (26) durch eine Drehbewegung mechanisch verbunden sind, wobei das erste Kupplungsmittel (30) ein Sperrelement aufweist, das es ermöglicht, die Stromversorgung der ersten Nichtpermanentmagneten (16) zu kappen, wobei die zweiten Nichtpermanentmagneten (26) immer mit elektrischem Strom versorgt werden.

19. Reversible elektrische Maschine (1) nach Anspruch 16,
**dadurch gekennzeichnet, dass** das erste Kupplungsmittel (30) das zweite Kupplungsmittel (40) und ein viertes Kupplungsmittel (41) umfasst, das unter Einwirkung einer zweiten vorbestimmten Kraft ausrückbar ist und den ersten Rotor (12) und die Ausgangswelle (50) mechanisch verbindet, wobei das zweite Kupplungsmittel (40) und das vierte Kupplungsmittel (41) es somit erlauben, durch eine Drehbewegung den ersten Rotor (12) und den zweiten Rotor (22) über die Ausgangswelle (50) mechanisch miteinander zu verbinden.

20. Hybridantriebsanlage (105) eines Drehflügel-Luftfahrzeugs (100),
**dadurch gekennzeichnet, dass** die Hybridantriebsanlage (105) ein Hauptleistungsgetriebe (101) aufweist, das mit einem Hauptrotor (102) des Luftfahrzeugs (100) verbunden ist, wobei mindestens ein Verbrennungsmotor (103) mechanisch mit dem Hauptleistungsgetriebe (101) verbunden ist, und mindestens eine reversible elektrische Maschine (1) nach einem der Ansprüche 1 bis 19, deren Ausgangswelle (50) mechanisch mit dem Hauptleistungsgetriebe (101) verbunden ist.

21. Hybridantriebsanlage (105) eines Drehflügel-Luftfahrzeugs (100),
**dadurch gekennzeichnet, dass** die Hybridantriebsanlage (105) ein Hauptleistungsgetriebe (101) aufweist, das mit einem Hauptrotor (102) des Luftfahrzeugs (100) verbunden ist, und mindestens einen Verbrennungsmotor (103), der mit einer Arbeitsturbine und mit einem Kompressor versehen ist, sowie mindestens eine reversible elektrische Maschine (1) nach einem der Ansprüche 1 bis 19, deren Ausgangswelle (50) mechanisch mit dem Kompressor des Verbrennungsmotors (103) verbunden ist, wobei die Arbeitsturbine des Verbrennungsmotors (103) mechanisch mit dem Hauptleistungsgetriebe (101) verbunden ist.

## Claims

1. Reversible electric machine (1) comprising:
- a first electric device (10) provided with a first rotor (12) cooperating with a first stator (11),
- a second electric device (20) comprising a second rotor (22) cooperating with a second stator (21),
- a first coupling means (30) disengageable so as to enable said first and second rotors (12,22) to be associated or dissociated in rotation and
- an output shaft (50),
**characterised in that** said reversible electric machine (1) comprises a second coupling means (40) disengageable under a first predetermined force and mechanically connecting said second rotor (22) to said output shaft (50), said first electric device (10) being a motor transmitting mechanical power to said output shaft (50) and said second electric device (20) being a motor-generator transmitting in motor mode additional mechanical power to said output shaft (50) and receiving in generator mode mechanical power from said output shaft (50).

2. Reversible electric machine (1) according to claim 1,
**characterised in that** said first rotor (12) comprises first permanent magnets (15).

3. Reversible electric machine (1) according to any one of claims 1 to 2,
**characterised in that** said second rotor (22) comprises second permanent magnets (25).

4. Reversible electric machine according to any one of claims 1 to 3,
**characterised in that** said first rotor (12) comprises first non-permanent magnets (16).

5. Reversible electric machine (1) according to any one of claims 1 to 4,
**characterised in that** said second rotor (22) comprises second non-permanent magnets (26).

6. Reversible electric machine (1) according to any one of claims 1 to 5,
**characterised in that**, said first rotor (12) and said second rotor (22) rotating about the same axis of rotation, said first coupling means (30) comprises an intermediate shaft (51), said second coupling means (40) and a disengageable third coupling means (35) mechanically connecting said first rotor (12) and said intermediate shaft (51), said intermediate shaft (51) being associated with said output shaft (50), thereby enabling said first rotor (12) to be mechanically connected to said second rotor (22).

7. Reversible electric machine (1) according to claim 6,
**characterised in that**, said third coupling means (35) comprises a freewheel enabling said first rotor (12) to be associated with said intermediate shaft (51), and consequently with said second rotor (22), in one direction of rotation and to be dissociated from said intermediate shaft (51), and consequently from said second rotor (22), in the other direction of rotation, said second coupling means (40) being engaged.

8. Reversible electric machine (1) according to claim 7,
**characterised in that** said intermediate shaft (51) constitutes one end of said output shaft (50).

9. Reversible electric machine (1) according to claim 5
**characterised in that** said first rotor (12) being formed by non-permanent first magnets (16) supplied with direct electric current and said second rotor (22) being formed by non-permanent second magnets (26) supplied with direct electric current, said non-permanent first magnets (16) and said non-permanent second magnets (26) being mechanically connected in rotation, said first coupling means (30) comprises an inhibition means enabling the electric supply of said non-permanent first magnets (16) to be switched off, said non-permanent second magnets (26) still being supplied with electric current.

10. Reversible electric machine (1) according to claim 9
**characterised in that** said first coupling means (30) comprises said second coupling means (40) and a fourth coupling means (41) disengageable under a second predetermined force and mechanically connecting said first rotor (12) and said output shaft (50), said second coupling means (40) and said fourth coupling means (41) thus enabling said first rotor (12) and said second rotor (22) to be mechanically connected in rotation by said output shaft (50).

11. Reversible electric machine (1) according to any one of claims 1 to 10,
**characterised in that** said second rotor comprising a bore (41) associated with said second rotor (22), said second coupling means (40) comprises a fuse element (42) connecting in rotation said bore (41) and said output shaft (50), said fuse element (42) being defined to break under said first predetermined force in order to dissociate said second bore (41) from said output shaft (50).

12. Reversible electric machine (1) according to any one of claims 1 to 11,
**characterised in that** said first magnets (15,16) of said first rotor (12) rotate outside said first stator (11).

13. Reversible electric machine (1) according to any one of claims 1 to 12,
**characterised in that** said second magnets (25,26) of said second rotor (22) rotate inside said second stator (21).

14. Reversible electric machine (1) according to any one of claims 1 to 13,
**characterised in that** at least one first magnet (15,16) is oriented radially relative to the axis of rotation of said first rotor (12) and at least one second magnet (25,26) is oriented radially relative to the axis of rotation of said second rotor (22).

15. Reversible electric machine (1) according to any one of claims 1 to 14,
**characterised in that** at least one first magnet (15,16) is oriented axially relative to the axis of rotation of said first rotor (12) and at least one second magnet (25,26) is oriented axially relative to the axis of rotation of said second rotor (22).

16. Reversible electric machine (1) comprising:
- a first electric device (10) provided with a first rotor (12) cooperating with a stator (5),
- a second electric device (20) comprising a second rotor (22) cooperating with said stator (5),
- a first coupling means (30) disengageable so as to enable said first and second rotors (12,22) to be associated or dissociated in rotation and
- an output shaft (50),
**characterised in that** said reversible electric machine (1) comprises a second coupling means (40) disengageable under a first predetermined force and mechanically connecting said second rotor (22) to said output shaft (50), said first electric device (10) being a motor transmitting mechanical power to said output shaft (50) and said second electric device (20) being a motor-generator transmitting in motor mode additional mechanical power to said output shaft (50) and receiving in generator mode mechanical power from said output shaft (50).

17. Reversible electric machine (1) according to claim 16,
**characterised in that** said first coupling means (30) comprises an intermediate shaft (51), said second coupling means (40) and a third disengageable coupling means (35) mechanically connecting said first rotor (12) and said intermediate shaft (51), said intermediate shaft (51) being associated with said output shaft (50), thereby enabling said first rotor (12) to be mechanically connected to said second rotor (22).

18. Reversible electric machine (1) according to claim 16,
**characterised in that** said first rotor (12) being formed by non-permanent first magnets (16) supplied with direct electric current and said second rotor (22) being formed by non-permanent second magnets (26) supplied with direct electric current, said non-permanent first magnets (16) and said non-permanent second magnets (26) being mechanically connected in rotation, said first coupling means (30) comprises an inhibition means enabling the electric supply of said non-permanent first magnets (16) to be switched off, said non-permanent second magnets (26) still being supplied with electric current.

19. Reversible electric machine (1) according to claim 16,
**characterised in that** said first coupling means (30) comprises said second coupling means (40) and a fourth coupling means (41) disengageable under a second predetermined force and mechanically connecting said first rotor (12) and said output shaft (50), said second coupling means (40) and said fourth coupling means (41) thus enabling said first rotor (12) and said second rotor (22) to be mechanically connected in rotation by said output shaft (50).

20. Hybrid power plant (105) of a rotary wing aircraft (100),
**characterised in that** said hybrid power plant (105) comprises a main power transmission gearbox (101) connected to a main rotor (102) of said aircraft (100), at least one thermal engine (103) mechanically connected to said main power transmission gearbox (101) and at least one reversible electric machine (1) according to any one of claims 1 to 19, said output shaft (50) of which is mechanically connected to said main power transmission gearbox (101).

21. Hybrid power plant (105) of a rotary wing aircraft (100),
**characterised in that** said hybrid power plant (105) comprises a main power transmission gearbox (101) connected to a main rotor (102) of said aircraft (100), at least one thermal engine (103) provided with a free turbine and a compressor, together with at least one reversible electric machine (1) according to any one of claims 1 to 19, said output shaft (50) of which is mechanically connected to said compressor of said thermal engine (103), said free turbine of said thermal engine (103) being mechanically connected to said main power transmission gearbox (101).
